# EUROPEAN PATENT APPLICATION

(11) **EP 4 831 945 A1**
(43) Date of publication of application: **28.10.2026**
(21) Application number: 23962229.3
(22) Date of filing: 21.12.2023
(51) Int. Cl.: G07C 5/00, B60R 11/02, G08B 23/00

(54) **DRIVING RECORDER, CONTROL METHOD FOR DRIVING RECORDER, AND CONTROL PROGRAM**

(71) Applicant: Pioneer Corporation, Tokyo 113-0021 (JP)
(72) Inventor: MATSUMURA Hirofumi, Kawagoe-shi, Saitama 350-8555 (JP); WADA Yukihito, Tokyo 113-0021 (JP)
(74) Representative: Vossius & Partner Patentanwälte Rechtsanwälte mbB
(86) International application number: PCT/JP2023/045889
(87) International publication number: WO 2025/134309

(57) **Abstract**

The drive recorder (1) includes a fixing part (11), a vibration part (12), a detection unit (31), and a control unit (21). The fixing part (11) adhesively attaches the drive recorder (1) to a windshield (40) of a vehicle. The vibration part (12) is installed over the windshield (40) by adhesively attaching the fixing part (11) to the windshield (40). The detection unit (31) detects a moving object around the vehicle or inside the vehicle while the vehicle is parked or stopped. In a case where a movement of the moving object satisfies a predetermined condition, the control unit (21) controls the vibration part (12) to vibrate the windshield (40).

## Description

### TECHNICAL FIELD

The present invention relates to a drive recorder, a control method of a drive recorder, and a control program.

### BACKGROUND ART

Patent Document 1 discloses a technique for improving an accuracy of detecting a suspicious person and a security performance in a vehicle security device.

Patent Document 2 discloses a technique for a drive recorder suitable for imaging a wide range as desired.

### RELATED DOCUMENTS

### PATENT DOCUMENTS

Patent Document 1: Japanese Unexamined Patent Publication No. 2020-149088
Patent Document 2: Japanese Unexamined Patent Publication No. 2021-56746

### SUMMARY OF THE INVENTION

### TECHNICAL PROBLEM

In recent years, a drive recorder having a vehicle security function has been distributed. Among the drive recorders, there is a drive recorder that emits a warning sound or the like in conjunction with a speaker when a suspicious person is detected outside the vehicle. However, in a case where the speaker is installed separately from the drive recorder, problems such as an installation space, an installation labor, and a cost occur.

Examples of the problem to be solved by the present invention include simple introduction of a drive recorder with a speaker. In addition, as another example of the problem, it is possible to extract a problem that becomes apparent from the descriptions of the specification, the drawings, the claims, and the like.

### SOLUTION TO PROBLEM

According to the invention described in claim 1, there is provided a drive recorder including
a fixing part that adhesively attaches the drive recorder to a windshield of a vehicle;
a vibration part that is installed over the windshield by adhesively attaching the fixing part to the windshield;
a detection unit that detects a moving object around the vehicle or inside the vehicle while the vehicle is parked or stopped; and
a control unit that controls the vibration part to vibrate the windshield in a case where a movement of the moving object satisfies a predetermined condition.

According to the invention described in claim 7, there is provided a control method of a drive recorder,
the drive recorder including
a fixing part that adhesively attaches the drive recorder to a windshield of a vehicle,
a vibration part that is installed over the windshield by adhesively attaching the fixing part to the windshield, and
a detection unit that detects a moving object around the vehicle or inside the vehicle while the vehicle is parked or stopped,
the control method comprising:
   by a computer, controlling the vibration part to vibrate the windshield in a case where a movement of the moving object satisfies a predetermined condition.

According to the invention described in claim 8, there is provided a control program for controlling a drive recorder,
the drive recorder including
a fixing part that adhesively attaches the drive recorder to a windshield of a vehicle,
a vibration part that is installed over the windshield by adhesively attaching the fixing part to the windshield, and
a detection unit that detects a moving object around the vehicle or inside the vehicle while the vehicle is parked or stopped,
the control program causing a computer to control the vibration part to vibrate the windshield in a case where a movement of the moving object satisfies a predetermined condition.

### BRIEF DESCRIPTION OF THE DRAWINGS

FIG. 1 is a perspective view of a drive recorder according to a first embodiment.
FIG. 2 is a side view of the drive recorder according to the first embodiment.
FIG. 3 is a diagram showing a state in which a main body unit according to the first embodiment is detached from a fixing unit.
FIG. 4 is a perspective view of the fixing unit after the main body unit according to the first embodiment is detached.
FIG. 5 is a diagram showing a state inside the fixing unit according to the first embodiment.
FIG. 6 is a perspective view of the main body unit after being detached from the fixing unit according to the first embodiment.
FIG. 7 is a diagram showing a hardware configuration example of a control unit.
FIG. 8 is a side view of a drive recorder according to a second embodiment.
FIG. 9 is a side view of an imaging unit according to the second embodiment.
FIG. 10 is a diagram showing an imaging unit according to a third embodiment as viewed from a display surface side.
FIG. 11 is a diagram showing an irradiation direction of a detection unit according to the third embodiment.

### DESCRIPTION OF EMBODIMENTS

Hereinafter, a description will be made for an embodiment of the present invention using the drawings. In all drawings, the same constitutional elements are designated by the same reference numerals, and the description thereof will not be repeated.

### <First Embodiment>

### (Drive Recorder 1)

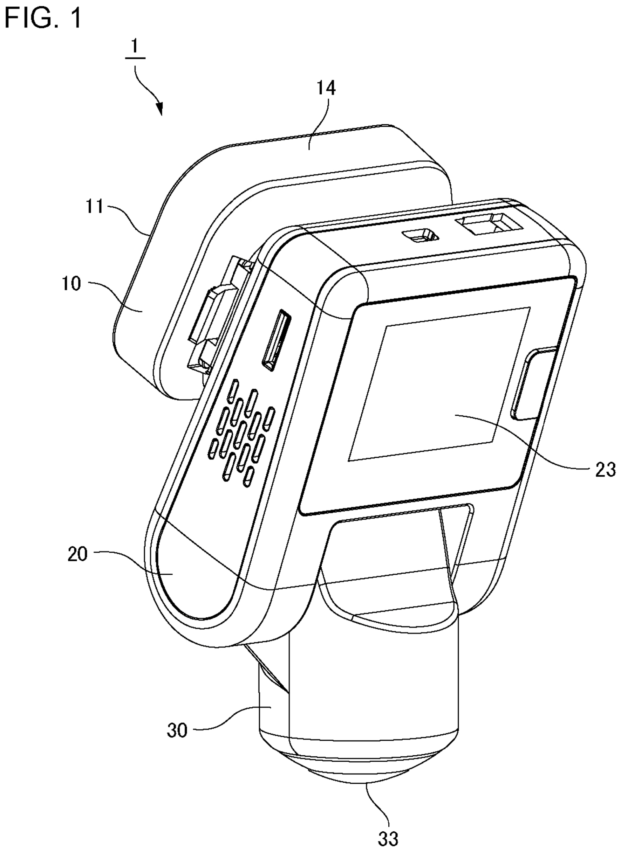

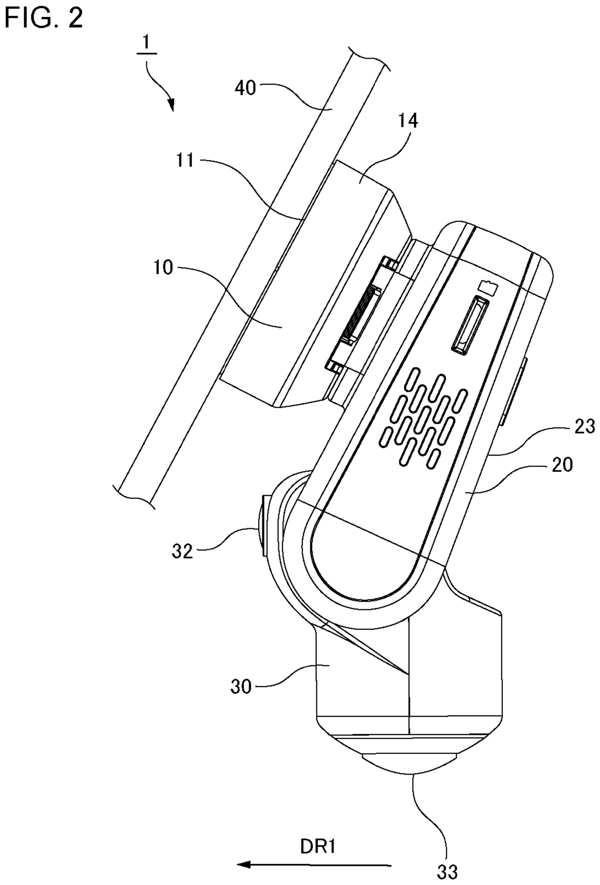

FIG. 1 is a perspective view of a drive recorder 1 according to a first embodiment. FIG. 2 is a side view of the drive recorder 1 according to the first embodiment. In the first embodiment, the drive recorder 1 is provided in a vehicle. In the first embodiment, the drive recorder 1 is carried in from the outside of the vehicle and is attached to a windshield 40 of the vehicle. In the first embodiment, the drive recorder 1 includes a fixing unit 10, a main body unit 20, and an imaging unit 30.

### (Fixing unit 10)

The fixing unit 10 includes a fixing part 11 and a vibration part 12 (not shown in the drawings). The fixing part 11 is a part that adhesively attaches the drive recorder 1 to the windshield 40 of the vehicle. In a state in which the drive recorder 1 is adhesively attached (bonded) to the windshield 40, the fixing part 11 and the windshield 40 are in contact with each other. A double-sided tape is provided on a mounting surface of the fixing part 11 on a windshield 40 side, and the fixing unit 10 is bonded to the windshield 40 by the double-sided tape.

The vibration part 12 (not shown in the drawings) is built in the fixing unit 10. The vibration part 12 is installed to be in contact with the windshield 40 by adhesively attaching the fixing part 11 to the windshield 40. In this case, the vibration part 12 directly vibrates the windshield 40. Alternatively, the vibration part 12 may be installed over the windshield 40 in an aspect in which a part of the fixing part 11 is sandwiched, without being in contact with the windshield 40, by adhesively attaching the fixing part 11 to the windshield 40. In this case, the vibration part 12 vibrates the windshield 40 through the fixing part 11.

### (Main Body Unit 20)

The main body unit 20 is a unit that forms a body of the drive recorder 1. The main body unit 20 is a unit that is attached to the fixing unit 10. The main body unit 20 is attached to the windshield 40 through the fixing unit 10. The main body unit 20 includes a display unit 23. The display unit 23 is a display, and an image captured by a first imaging unit 32 which is described later, can be displayed on the display unit 23.

### (Imaging Unit 30)

The imaging unit 30 is a unit that is attached to the main body unit 20. The imaging unit 30 includes a detection unit 31 (not shown in the drawings), the first imaging unit 32, and a second imaging unit 33. The detection unit 31 is built in the imaging unit 30. The detection unit 31 detects a moving object (a person or the like) around the vehicle or inside the vehicle while the vehicle is parked or stopped.

The first imaging unit 32 is a camera that images a forward direction DR1 of the vehicle. The second imaging unit 33 is a camera that captures an image of at least one of an area inside the vehicle and around the vehicle. The second imaging unit 33 is, for example, a fisheye lens camera capable of 360-degree omnidirectional imaging. The first imaging unit 32 and the second imaging unit 33 are cameras for recording images during traveling of the vehicle and images around the vehicle or inside the vehicle while the vehicle is parked or stopped.

### (Control Unit 21)

The main body unit 20 further includes a control unit 21. The control unit 21 controls the vibration part 12 to vibrate the windshield 40 in a case where a movement of the moving object detected by the detection unit 31 satisfies a predetermined condition. By vibrating the windshield 40 with the vibration part 12, the windshield 40 can emit a sound such as a warning sound or the like to the outside instead of a vibration plate of a speaker.

The predetermined condition is, for example, a case in which the moving object is detected within a predetermined distance from the detection unit 31 continuously for a first predetermined time (for example, 60 seconds) or longer. As another example, the predetermined condition is, for example, a case in which the moving object is continuously detected in the vicinity of a door of the vehicle for a second predetermined time (for example, 10 seconds) or longer.

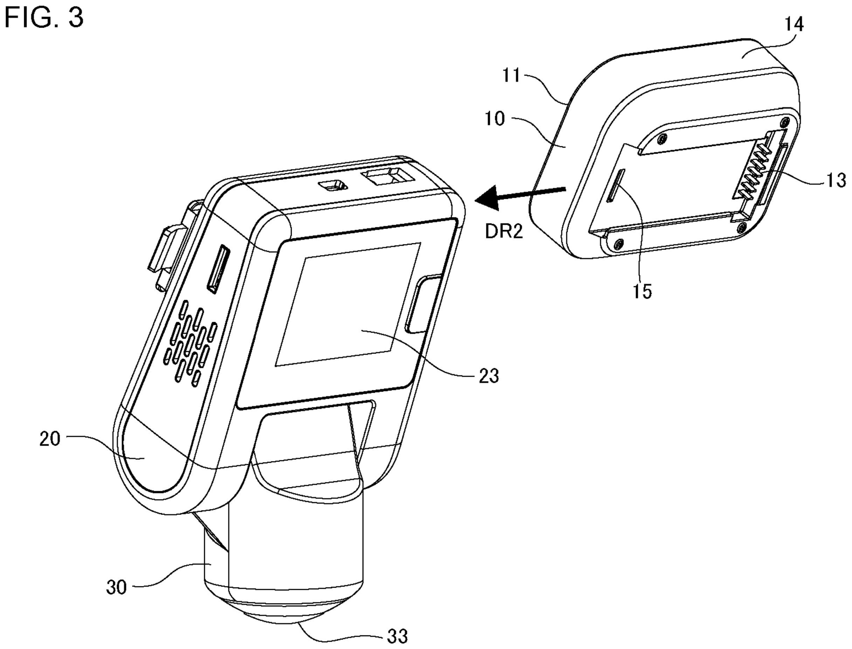

FIG. 3 is a diagram showing a state in which the main body unit 20 according to the first embodiment is detached from the fixing unit 10. The main body unit 20 (and the imaging unit 30) is detachable from the fixing unit 10. In the first embodiment, the main body unit 20 is detachable from the fixing unit 10 by sliding relative to the fixing unit 10 in one horizontal direction DR2. The one direction DR2 is a width direction of the vehicle and is a direction perpendicular to the forward direction of the vehicle.

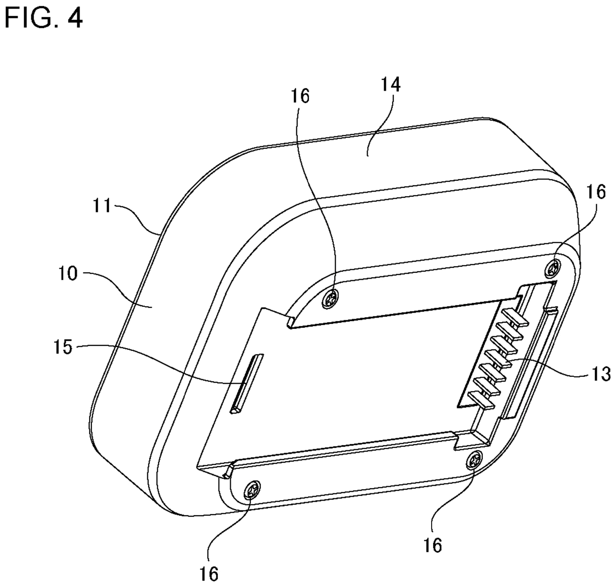

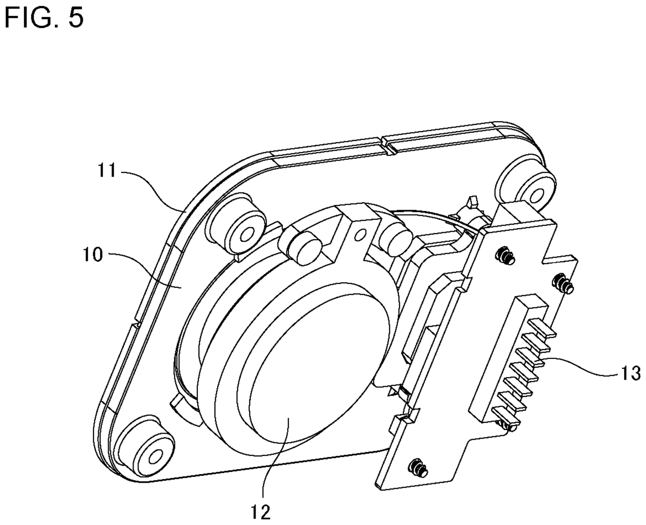

FIG. 4 is a perspective view of the fixing unit 10 after the main body unit 20 according to the first embodiment is detached. FIG. 5 is a diagram showing a state inside the fixing unit 10 according to the first embodiment. The fixing unit 10 further includes a first electrical contact 13, a housing unit 14, and a recessed portion 15. The first electrical contact 13 is a conductor and is electrically connected to the vibration part 12. In a state in which the main body unit 20 is detached from the fixing unit 10, the first electrical contact 13 is exposed.

The housing unit 14 is a housing having a box-like shape. The housing unit 14 is attached to the fixing part 11 to store the vibration part 12. In the first embodiment, the vibration part 12 includes a vibration speaker. The vibration speaker is stored in the housing unit 14.

A plurality of screw holes 16 are formed in the housing unit 14. In the first embodiment, four screw holes 16 are formed in the housing unit 14. The screw holes 16 are provided on a side corresponding to the main body unit 20. The housing unit 14 is screwed to the fixing part 11 through the screw holes 16 from the main body unit 20 side.

The housing unit 14 is detachable from the fixing part 11 adhesively attached to the windshield 40 in a state in which the main body unit 20 is detached from the fixing unit 10. That is, even in a state in which the fixing part 11 is bonded to the windshield 40, the housing unit 14 can be detached from the fixing part 11 by removing screws attached to the housing unit 14.

The recessed portion 15 has a groove-like shape and is a portion that is fitted to a protruding portion 24 which will be described later. The recessed portion 15 extends in a direction perpendicular to the one direction DR2.

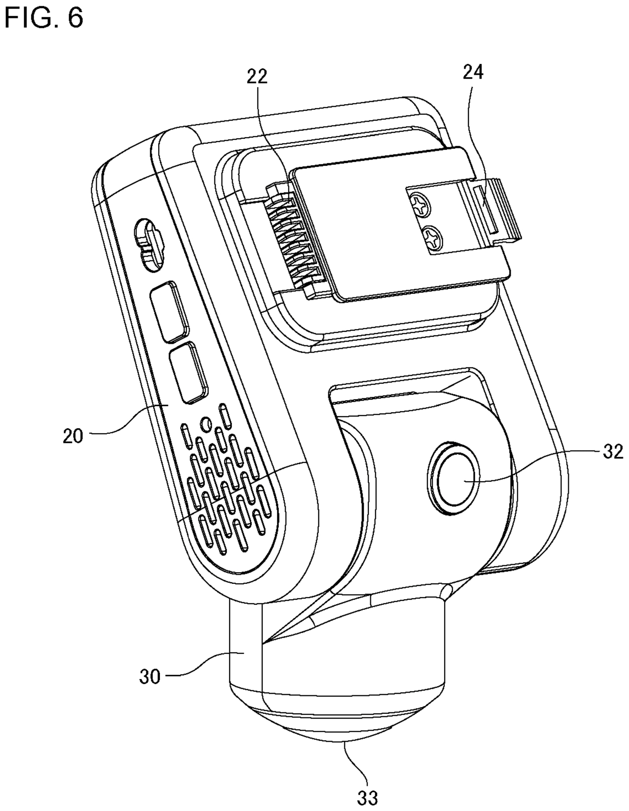

FIG. 6 is a perspective view of the main body unit 20 after being detached from the fixing unit 10 according to the first embodiment. The main body unit 20 further includes a second electrical contact 22 and the protruding portion 24. The second electrical contact 22 is a conductor and is electrically connected to the control unit 21 (not shown in the drawings) built in the main body unit 20. In a state in which the main body unit 20 is detached from the fixing unit 10, the second electrical contact 22 is exposed.

The protruding portion 24 protrudes from a surface of the main body unit 20 facing the fixing unit 10. The protruding portion 24 is a portion that is fitted to the recessed portion 15. The main body unit 20 is attached (fixed) to the fixing unit 10 by fitting the protruding portion 24 to the recessed portion 15. In a state in which the main body unit 20 is attached to the fixing unit 10, the first electrical contact 13 and the second electrical contact 22 are in contact with each other and are electrically connected to each other. In this way, the control unit 21 and the vibration part 12 are electrically connected to each other.

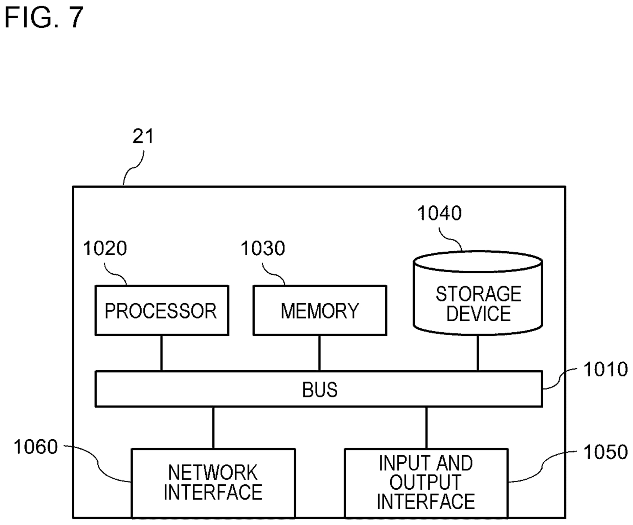

FIG. 7 is a diagram showing a hardware configuration example of the control unit 21. The control unit 21 includes a bus 1010, a processor 1020, a memory 1030, a storage device 1040, an input and output interface 1050, and a network interface 1060.

The bus 1010 is a data transmission path through which the processor 1020, the memory 1030, the storage device 1040, the input and output interface 1050, and the network interface 1060 transmit and receive to and from each other. However, a connection method of the processor 1020 or the like is not limited to bus connection.

The processor 1020 is a processor that is implemented using a central processing unit (CPU), a graphics processing unit (GPU), or the like.

The memory 1030 is a main storage device that is implemented using a random access memory (RAM) or the like.

The storage device 1040 is an auxiliary storage device implemented using a hard disk drive (HDD), a solid-state drive (SSD), removable media such as a memory card, a read-only memory (ROM), or the like, and has a recording medium. This medium stores program modules for implementing each function of the control unit 21. The processor 1020 reads and executes each of the program modules on the memory 1030, so that each function corresponding to the program module is implemented.

The input and output interface 1050 is an interface for connecting the control unit 21 and various input and output devices to each other. For example, the control unit 130 communicates with the vibration part 12, the display unit 23, the first imaging unit 32, the second imaging unit 33, and the detection unit 31 through the input and output interface 1050.

The network interface 1060 is an interface for connecting the control unit 21 to a network. The network is, for example, a local area network (LAN) or a wide area network (WAN). A method for connecting the network interface 1060 to the network may be a wireless connection or a wired connection.

As described above, the drive recorder 1 according to the first embodiment includes the fixing part 11, the vibration part 12, the detection unit 31, and the control unit 21. In a case in which a suspicious person is detected inside the vehicle or around the vehicle, a drive recorder that emits a warning sound requires a speaker for emitting the warning sound. The drive recorder 1 according to the first embodiment has a configuration integrated with the vibration part 12 (vibration speaker), and by vibrating the windshield 40 to serve as a speaker, it is not necessary to provide an additional speaker in the vehicle separately from the drive recorder 1. As a result, it is possible to reduce labor required for installation of an additional speaker to the vehicle, and it is possible to further reduce manufacturing costs. Therefore, it is possible to easily introduce a drive recorder with a speaker.

Further, the main body unit 20 according to the first embodiment is detachable from the fixing unit 10. Since the fixing unit is adhesively attached to the windshield with a strong double-sided tape and is difficult to be detached, in a case where the main body unit fails, it is difficult to be detached from the windshield together with the main body unit. However, since the main body unit 20 according to the first embodiment can be detached from the fixing unit 10, even in a case where the main body unit 20 fails, the main body unit 20 can be easily separated from the fixing unit 10. That is, maintainability of the drive recorder 1 can be improved.

Further, the main body unit 20 according to the first embodiment is detachable from the fixing unit 10 by sliding relative to the fixing unit 10 in the one horizontal direction DR2. As a result, in a case where the main body unit 20 is detached from the fixing unit 10, it is possible to suppress an increase in difficulty in removing the main body unit 20 caused by contact of the main body unit 20 with the windshield 40. Further, it is possible to suppress falling of the main body unit 20 caused by its own weight.

### <Second Embodiment>

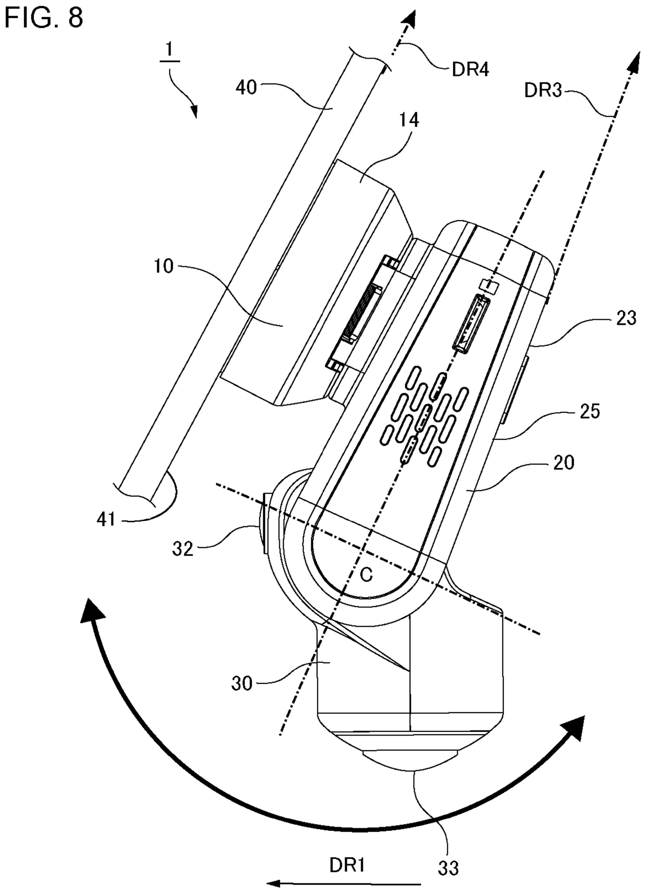

FIG. 8 is a side view of the drive recorder 1 according to the second embodiment. The imaging unit 30 according to the second embodiment is attached to the main body unit 20 and is rotatable with respect to the main body unit 20. The imaging unit 30 according to the second embodiment is configured to be rotatable about an axis point C of the main body unit 20 in a plane perpendicular to the one direction DR2 (the perpendicular direction to the page of FIG. 8) shown in FIG. 3.

A display surface 25 of the display unit 23 according to the second embodiment is substantially parallel to an extending surface 41 on which the windshield 40 extends. The case in which the display surface 25 is substantially parallel to the extending surface 41 refers to a case in which an angle formed between a direction DR3 in which the display surface 25 extends and a direction DR4 in which the extending surface 41 extends in a plane perpendicular to the one direction DR2 is equal to or more than -15° and equal to or less than 15°.

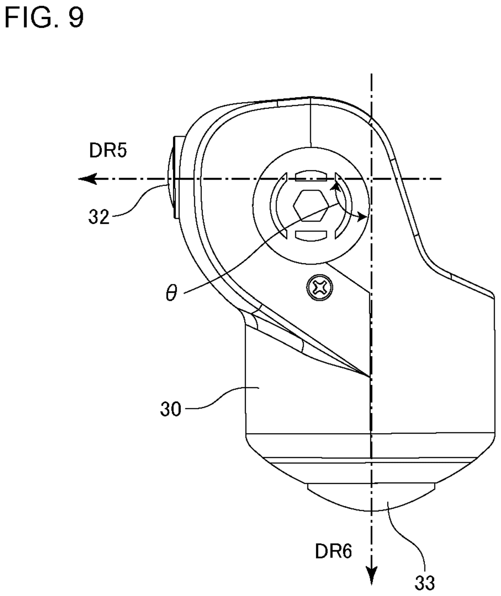

FIG. 9 is a side view of the imaging unit 30 according to the second embodiment. DR5 is an imaging center direction of the first imaging unit 32. The imaging center direction DR5 is an imaging direction of the first imaging unit 32 and is a direction passing through a center of a lens of the first imaging unit 32. DR6 is an imaging center direction of the second imaging unit 33. The imaging center direction DR6 is an imaging direction of the second imaging unit 33 and is a direction passing through a center of a lens of the second imaging unit 33.

In the second embodiment, the imaging center direction DR6 of the second imaging unit 33 is substantially perpendicular to the imaging center direction DR5 of the first imaging unit 32. The case in which the imaging center direction DR6 is substantially perpendicular to the imaging center direction DR5 is a case in which an angle θ formed between the imaging center direction DR6 and the imaging center direction DR5 is, for example, equal to or more than 75° and equal to or less than 105°. By setting the angle θ formed with the imaging center direction DR5 to, for example, 90° or more and 105° or less, in a case where the imaging center direction DR6 of the second imaging unit 33 is inclined to the rear side of the vehicle instead of the front side of the vehicle, the inside of the vehicle can be more effectively imaged.

As described above, the drive recorder 1 according to the second embodiment includes the imaging unit 30 including the first imaging unit 32 and the second imaging unit 33, and the main body unit 20 including the display unit 23, in which the imaging unit 30 is attached to the main body unit 20 and is rotatable with respect to the main body unit 20. As a result, since the image captured by the first imaging unit 32 can be displayed on the display unit 23, the imaging unit 30 can be angle-adjusted such that the first imaging unit 32 images the front (the forward direction DR1 of the vehicle) while checking the display unit 23 (such that the imaging center direction DR5 of the first imaging unit 32 oriented toward the forward direction DR1 of the vehicle). As a result, the imaging direction of the drive recorder 1 can be appropriately set.

Further, the display surface 25 of the display unit 23 is substantially parallel to the extending surface 41 on which the windshield 40 extends. By inclining the display surface 25 of the display unit 23 along the inclination of the windshield 40, for example, it is possible to minimize obstruction of the driver's forward field of view as compared to a case in which the same display surface 25 is disposed along the vertical direction.

Further, the imaging center direction DR6 of the second imaging unit 33 is substantially perpendicular to the imaging center direction DR5 of the first imaging unit 32. As a result, in a case where the first imaging unit 32 is adjusted to be oriented toward the forward direction DR1 of the vehicle, the second imaging unit 33 is automatically oriented toward the downward direction (substantially vertical direction). Therefore, by adjusting the angle of the first imaging unit 32, it is not necessary to adjust the angle of the second imaging unit 33. Therefore, even in a case where there are two imaging units of the first imaging unit 32 and the second imaging unit 33, the angle of the imaging unit 30 can be appropriately and effectively adjusted.

### <Third Embodiment>

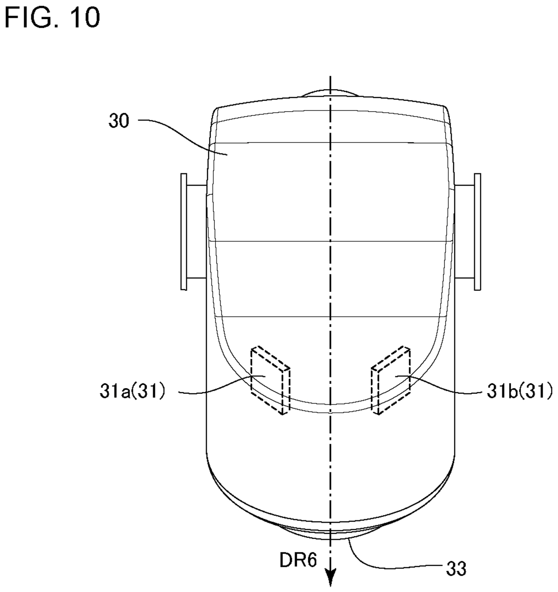

FIG. 10 is a diagram showing the imaging unit 30 according to the third embodiment as viewed from the display surface 25 side. FIG. 10 shows a view of the imaging unit 30 as viewed from a direction opposite to the first imaging unit 32. The imaging unit 30 according to the third embodiment further includes the detection unit 31 that detects the moving object around the vehicle or inside the vehicle. The detection unit 31 is provided on a side of the imaging unit 30 opposite to the first imaging unit 32. The detection unit 31 is built in the imaging unit 30.

The detection unit 31 according to the third embodiment includes a plurality of electromagnetic wave sensors. Each of the plurality of electromagnetic wave sensors detects the moving object by emitting the electromagnetic wave. The electromagnetic wave sensor emits the electromagnetic wave at least toward a door of the vehicle. In the third embodiment, the detection unit 31 includes two electromagnetic wave sensors (31a, 31b), and the two electromagnetic wave sensors 31a, 31b are disposed in a left-right symmetrical manner with respect to the imaging center direction DR6.

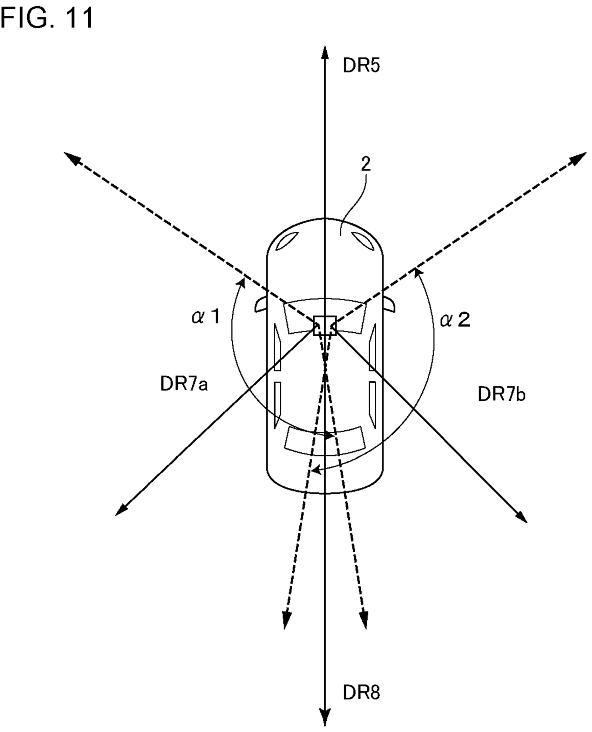

FIG. 11 is a diagram showing an irradiation direction of the electromagnetic wave of the detection unit 31 according to the third embodiment. Each of irradiation center directions (DR7a, DR7b) of the electromagnetic waves emitted from the plurality of electromagnetic wave sensors (detection unit 31) is inclined with respect to a direction DR8 opposite to the imaging center direction DR5 of the first imaging unit 32, in a horizontal plane (a plane perpendicular to the height direction of the vehicle 2). The irradiation center direction of the electromagnetic wave emitted from the electromagnetic wave sensor is inclined toward the rear side of the vehicle 2 with respect to the width direction (one direction DR2) of the vehicle, in the horizontal plane.

DR7a is an irradiation center direction of the electromagnetic wave sensor 31a. The electromagnetic wave sensor 31a emits the electromagnetic wave in a predetermined range α1 with the center direction DR7a as a center. DR7b is an irradiation center direction of the electromagnetic wave sensor 31b. The electromagnetic wave sensor 31b emits the electromagnetic wave in a predetermined range α2 with the center direction DR7b as a center.

In the third embodiment, the second imaging unit 33 may not be provided, and the imaging unit 30 may have a configuration including the first imaging unit 32 and the detection unit 31.

As described above, the drive recorder 1 according to the third embodiment includes the imaging unit 30 including the first imaging unit 32 and the detection unit 31, and the main body unit 20 including the display unit 23, in which the imaging unit 30 is attached to the main body unit 20 and is rotatable with respect to the main body unit 20. The detection unit 31 includes the plurality of electromagnetic wave sensors, each of which detects moving objects by emitting electromagnetic waves.

As a result, in a case where the imaging unit 30 is angle-adjusted such that the first imaging unit 32 images the front (the forward direction DR1 of the vehicle) while checking at the image captured by the first imaging unit 32, the irradiation direction of the electromagnetic wave is automatically determined to an appropriate direction without adjusting the angle of the detection unit 31 (electromagnetic wave sensor). Therefore, the moving object can be appropriately detected.

### <Fourth Embodiment>

As shown in FIGS. 2, 4, and 6, the drive recorder 1 according to the fourth embodiment includes the fixing unit 10 that is fixed to the windshield of the vehicle, and the main body unit 20 that is detachable from the fixing unit 10. The fixing unit 10 according to the fourth embodiment includes the fixing part 11, the vibration part 12, and the first electrical contact 13. The main body unit 20 according to the fourth embodiment includes the detection unit 31, the control unit 21, and the second electrical contact 22. In the fourth embodiment, in a state in which the main body unit 20 is attached to the fixing unit 10, the first electrical contact 13 and the second electrical contact 22 are in contact with each other.

As described above, the drive recorder 1 according to the fourth embodiment may have a configuration in which the main body unit 20 includes the detection unit 31.

In the fourth embodiment, even in a case where the main body unit 20 fails, the main body unit 20 can be easily separated from the fixing unit 10 without detaching the fixing part 11 from the windshield 40, and the maintainability of the drive recorder 1 can be improved.

### <Fifth Embodiment>

As shown in FIGS. 2, 4, and 5, the drive recorder 1 according to the fifth embodiment includes the fixing unit 10 including the fixing part 11, the vibration part 12, and the housing unit 14, and the main body unit 20 including the detection unit 31 and the control unit 21 and being detachable from the fixing unit 10. The housing unit 14 is detachable from the fixing part 11 adhesively attached to the windshield 40 in a state in which the main body unit 20 is detached from the fixing unit 10.

In the drive recorder 1 according to the fifth embodiment, the main body unit 20 may have a configuration including the detection unit 31.

In the fifth embodiment, even in a case where the main body unit 20 fails, the main body unit 20 can be easily separated from the fixing unit 10 without detaching the fixing part 11 from the windshield 40. Further, since the housing unit 14 can be detached while the fixing part 11 is adhesively attached to the windshield 40, even in a case where the vibration part 12 (vibration speaker) fails, the vibration part 12 inside the fixing unit 10 can be easily detached. That is, maintainability of the drive recorder 1 can be improved.

Although the embodiments have been described above with reference to the drawings, these are examples of the present invention, and various configurations other than the above can also be adopted.

In the first embodiment, the main body unit 20 may include the detection unit 31, the first imaging unit 32, and the second imaging unit 33. That is, the main body unit 20 may have a configuration including the imaging unit 30.

Hereinafter, examples of the embodiments will be added.
1. A drive recorder including:
   a fixing part that adhesively attaches the drive recorder to a windshield of a vehicle;
   a vibration part that is installed over the windshield by adhesively attaching the fixing part to the windshield;
   a detection unit that detects a moving object around the vehicle or inside the vehicle while the vehicle is parked or stopped; and
   a control unit that controls the vibration part to vibrate the windshield in a case where a movement of the moving object satisfies a predetermined condition.
2. The drive recorder according to 1., further including:
   a fixing unit that includes the fixing part and the vibration part; and
   a main body unit that includes the control unit,
   wherein the main body unit is detachable from the fixing unit.
3. The drive recorder according to 2.,
   in which the main body unit is detachable from the fixing unit by sliding relative to the fixing unit in one horizontal direction.
4. The drive recorder according to 2. or 3.,
   in which the fixing unit includes a first electrical contact that is electrically connected to the vibration part,
   the main body unit includes a second electrical contact that is electrically connected to the control unit, and
   the first electrical contact and the second electrical contact are in contact with each other in a state in which the main body unit is attached to the fixing unit.
5. The drive recorder according to any one of 2. to 4.,
   in which the fixing unit includes a housing unit that is attached to the fixing part to store the vibration part, and
   the housing unit is detachable from the fixing part that is adhesively attached to the windshield in a state in which the main body unit is detached from the fixing unit.
6. The drive recorder according to any one of 1. to 5.,
   in which the vibration part includes a vibration speaker.
7. A control method of a drive recorder,
   the drive recorder including
   a fixing part that adhesively attaches the drive recorder to a windshield of a vehicle,
   a vibration part that is installed over the windshield by adhesively attaching the fixing part to the windshield, and
   a detection unit that detects a moving object around the vehicle or inside the vehicle while the vehicle is parked or stopped,
   the control method comprising:
      by a computer, controlling the vibration part to vibrate the windshield in a case where a movement of the moving object satisfies a predetermined condition.
8. A control program for controlling a drive recorder,
   the drive recorder including
   a fixing part that adhesively attaches the drive recorder to a windshield of a vehicle,
   a vibration part that is installed over the windshield by adhesively attaching the fixing part to the windshield, and
   a detection unit that detects a moving object around the vehicle or inside the vehicle while the vehicle is parked or stopped,
   the control program causing a computer to control the vibration part to vibrate the windshield in a case where a movement of the moving object satisfies a predetermined condition.

### REFERENCE SIGNS LIST

1 drive recorder
10 fixing unit
11 fixing part
12 vibration part
13 first electrical contact
14 housing unit
15 recessed portion
16 screw hole
20 main body unit
21 control unit
22 second electrical contact
23 display unit
24 protruding portion
25 display surface
30 imaging unit
31 detection unit
32 first imaging unit
33 second imaging unit
40 windshield
41 extending surface

## Claims

1. A drive recorder comprising:
a fixing part that adhesively attaches the drive recorder to a windshield of a vehicle;
a vibration part that is installed over the windshield by adhesively attaching the fixing part to the windshield;
a detection unit that detects a moving object around the vehicle or inside the vehicle while the vehicle is parked or stopped; and
a control unit that controls the vibration part to vibrate the windshield in a case where a movement of the moving object satisfies a predetermined condition.

2. The drive recorder according to claim 1, further comprising:
a fixing unit that includes the fixing part and the vibration part; and
a main body unit that includes the control unit,
wherein the main body unit is detachable from the fixing unit.

3. The drive recorder according to claim 2,
wherein the main body unit is detachable from the fixing unit by sliding relative to the fixing unit in one horizontal direction.

4. The drive recorder according to claim 2 or 3,
wherein the fixing unit includes a first electrical contact that is electrically connected to the vibration part,
the main body unit includes a second electrical contact that is electrically connected to the control unit, and
the first electrical contact and the second electrical contact are in contact with each other in a state in which the main body unit is attached to the fixing unit.

5. The drive recorder according to claim 2 or 3,
wherein the fixing unit includes a housing unit that is attached to the fixing part to store the vibration part, and
the housing unit is detachable from the fixing part that is adhesively attached to the windshield in a state in which the main body unit is detached from the fixing unit.

6. The drive recorder according to any one of claims 1 to 3,
wherein the vibration part includes a vibration speaker.

7. A control method of a drive recorder,
the drive recorder including
a fixing part that adhesively attaches the drive recorder to a windshield of a vehicle,
a vibration part that is installed over the windshield by adhesively attaching the fixing part to the windshield, and
a detection unit that detects a moving object around the vehicle or inside the vehicle while the vehicle is parked or stopped,
the control method comprising:
by a computer, controlling the vibration part to vibrate the windshield in a case where a movement of the moving object satisfies a predetermined condition.

8. A control program for controlling a drive recorder,
the drive recorder including
a fixing part that adhesively attaches the drive recorder to a windshield of a vehicle,
a vibration part that is installed over the windshield by adhesively attaching the fixing part to the windshield, and
a detection unit that detects a moving object around the vehicle or inside the vehicle while the vehicle is parked or stopped,
the control program causing a computer to control the vibration part to vibrate the windshield in a case where a movement of the moving object satisfies a predetermined condition.
